# EUROPEAN PATENT SPECIFICATION

(11) **EP 2 253 167 B1**
(45) Date of publication and mention of the grant of the patent: **20.12.2017**
(21) Application number: 09721882.0
(22) Date of filing: 18.03.2009
(51) Int. Cl.: H04W 52/02, H04W 48/10, H04W 88/08

(54) **TECHNIQUES UTILIZING A LAYER-2 PROXY FOR ENERGY-EFFICIENT SERVICE DISCOVERY AND CONNECTIVITY IN NETWORKS**
TECHNIKEN ZUR BENUTZUNG EINES SCHICHT-2-PROXY FÜR ENERGIEEFFIZIENTE DIENSTENTDECKUNG UND KONNEKTIVITÄT IN NETZEN
TECHNIQUES UTILISANT UN SERVEUR PROXY DE COUCHE 2 POUR LA DÉCOUVERTE ET LA CONNECTIVITÉ DANS DES RÉSEAUX DE SERVICES À FAIBLE CONSOMMATION D ÉNERGIE

(30) Priority: 20.03.2008 US 52219
(43) Date of publication of application: 24.11.2010
(73) Proprietor: Intel Corporation, Santa Clara, CA 95054 (US)
(72) Inventor: LIU, Huaiyu, Portland, OR 97229 (US); LORTZ, Victor, Beaverton, OR 97007 (US)
(74) Representative: HGF Limited
(86) International application number: PCT/US2009/037482
(87) International publication number: WO 2009/117472

(56) References cited:
- US-A1- 2004 120 279
- US-A1- 2005 044 430
- US-A1- 2006 025 181
- US-A1- 2006 072 488
- US-A1- 2007 004 436
- US-A1- 2007 141 984
- Anonymous: "Wake-on-LAN - Wikipedia, the free encyclopedia", , 17 March 2008 (2008-03-17), XP055269753, Retrieved from the Internet: URL:https://en.wikipedia.org/w/index.php?t itle=Wake-on-LAN&oldid=198803704 [retrieved on 2016-04-29]

## Description

### BACKGROUND

Today, network devices that provide services (henceforth called "servers"), such as printing, projecting, display, and file sharing services, need to remain online to respond to requests from client devices ("clients") that need the services. However, power conservation is also of foremost importance. Furthermore, many devices today are becoming mobile, with wireless network interfaces and limited battery power. These devices need to be able to efficiently search for or advertise their own services without quickly depleting their batteries

Thus, a strong need exists for techniques for energy-efficient service discovery and connectivity in networks.

Reference is made to US 2005/0044430 A1, which discloses a system for implementing a sleep proxy. The system starts by receiving a request at the sleep proxy for information pertaining to a service provided by a device. In response to this request, the system determines if the device is a member of a list of devices for which the sleep proxy takes action. If so, the system determines if the sleep proxy can answer the request. If so, the sleep proxy sends a response to the request on behalf of the device. In a variation on this embodiment, if the system cannot answer the request on behalf of the device, the system sends a wakeup packet to the device, wherein the wakeup packet causes the device to exit a power-saving mode so that the device can respond to the request directly.

Reference is made to US 2007/0141984 A1, which discloses discovery of services between devices prior to establishing a connection between devices, including wireless-enabled devices or devices that are communicatively coupled to wireless access points. Discovering services prior to establishing a connection may facilitate finding a desired service. The services that may be discovered may be, for example, print services, camera services, PDA services or any other suitable services. Services may be discovered using 802.11, UWB or any other suitable wireless technology. As one example, particular services may be requested. As another example, services that are provided by a device may be advertised.

### BRIEF DESCRIPTION OF THE DRAWINGS

The subject matter regarded as the invention is particularly pointed out and distinctly claimed in the concluding portion of the specification. The invention, however, both as to organization and method of operation, together with objects, features, and advantages thereof, may best be understood by reference to the following detailed description when read with the accompanying drawings in which:

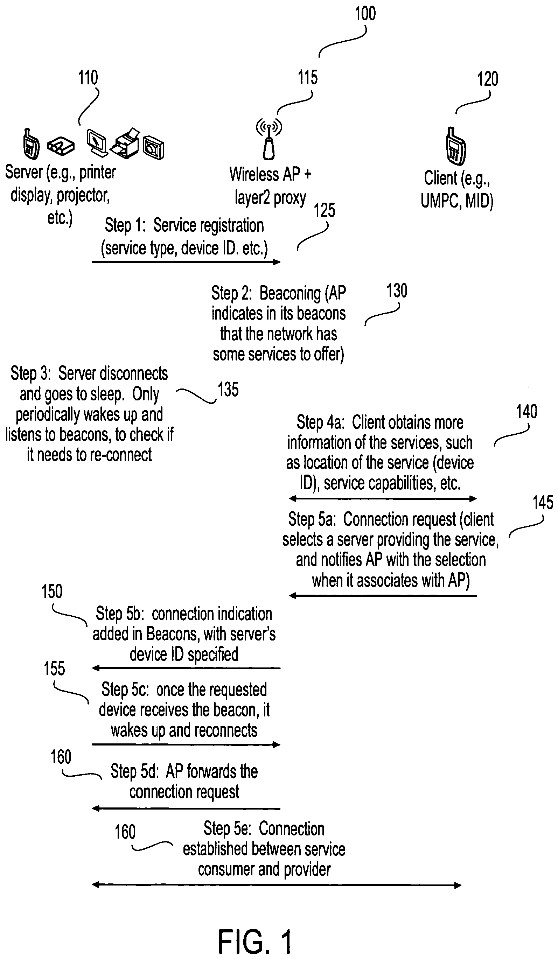

FIG. 1 illustrates a sample procedure for performing layer-2 proxy based energy conservation, service discovery, and service connection in an embodiment of the present invention.

It will be appreciated that for simplicity and clarity of illustration, elements illustrated in the figures have not necessarily been drawn to scale. For example, the dimensions of some of the elements are exaggerated relative to other elements for clarity. Further, where considered appropriate, reference numerals have been repeated among the figures to indicate corresponding or analogous elements.

### DETAILED DESCRIPTION

In the following detailed description, numerous specific details are set forth in order to provide a thorough understanding of the invention. However, it will be understood by those skilled in the art that the present invention may be practiced without these specific details. In other instances, well-known methods, procedures, components and circuits have not been described in detail so as not to obscure the present invention.

Embodiments of the invention may be used in a variety of applications. Some embodiments of the invention may be used in conjunction with various devices and systems, for example, a transmitter, a receiver, a transceiver, a transmitter-receiver, a wireless communication station, a wireless communication device, a wireless Access Point (AP), a modem, a wireless modem, a Personal Computer (PC), a desktop computer, a mobile computer, a laptop computer, a notebook computer, a tablet computer, a server computer, a handheld computer, a handheld device, a Personal Digital Assistant (PDA) device or a handheld PDA device.

Although embodiments of the invention are not limited in this regard, discussions utilizing terms such as, for example, "processing," "computing," "calculating," "determining," "establishing", "analyzing", "checking", or the like, may refer to operation(s) and/or process(es) of a computer, a computing platform, a computing system, or other electronic computing device, that manipulate and/or transform data represented as physical (e.g., electronic) quantities within the computer's registers and/or memories into other data similarly represented as physical quantities within the computer's registers and/or memories or other information storage medium that may store instructions to perform operations and/or processes.

Although embodiments of the invention are not limited in this regard, the terms "plurality" and "a plurality" as used herein may include, for example, "multiple" or "two or more". The terms "plurality" or "a plurality" may be used throughout the specification to describe two or more components, devices, elements, units, parameters, or the like. For example, "a plurality of stations" may include two or more stations.

Embodiments of the present invention provide integrating a proxy with an access point (AP), such as but not limited to a wireless access point, to function as layer-2 proxy for energy-saving service discovery. Integrating a proxy with layer-2 service discovery is also novel to the present invention, which allows client devices to discovery services in a network without the need to connect to the network. Furthermore, the layer-2 proxy in embodiments of the present invention enables both server and client devices to disconnect from the wireless network while remaining able to reconnect when needed, thereby eliminating the burden of maintaining network connectivity and further reducing power consumption.

An embodiment of the present invention as generally shown as 100 of FIG. 1 addresses energy conservation of servers 110 (e.g., printer, display projector etc.) in a network connected by a wireless AP/router 115, and provides a light-weight layer-2 solution included therein 115. Essentially, it integrates a layer-2 service discovery proxy with the AP. The wireless AP 115 advertises the services on behalf of servers 110 so that the servers can go to a low power state and conserve energy. Furthermore, a server 110 using the proxy can save even more power by disconnecting from the network and periodically listening to beacons to determine if it should wake up and reconnect.

Continuing with FIG. 1 is a sample procedure for performing layer-2 proxy based energy conservation, service discovery, and service connection in an embodiment of the present invention. Embodiments of the present invention may include the following components and procedures:
1. Service registration 125: If a server wishes to conserve energy while it is idle, it registers its services, device ID, etc. with the wireless AP proxy.
2. Layer-2 service discovery proxy: the proxy in the AP records the service information registered by servers, and then indicates in its beacons 130 that these services are available. To conserve beacon bandwidth, some of the service details are typically omitted from the beacon frames.
3. The server can now go to low power state 135. For instance, it typically goes to sleep, and only periodically wakes up to listen to beacons and maintain connectivity (on some devices, only the network interface card (NIC) remains on to maintain its connection with the AP). The server may even completely disconnect from the AP and periodically wake up, listen to beacons, and check if it needs to reconnect in case its service is requested.
4. Layer-2 proxy based service discovery 140: First, when a client device 120, such as an ultra mobile device, searches for services in the network, it finds that layer-2 service discovery is supported by the network and the AP functions as the service discovery proxy. Client devices could discover services advertised by the AP either through broadcast (e.g. beacons or some other layer-2 messages) or directed messages (e.g. by exchanged Probe Requests and Probe Responses), or a combination of both.
   It is noted that that in this step, the client could be already connected to the network (inside), or it may not be connected yet (outside). This also enables a client to disconnect from the network to save power once it is done utilizing a service. There is no need for the client to remain connected to keep track of service updates or new announcements since those are taken care of by the proxy.
5. AP supported connection establishment 145: When the client picks a particular server and requests to connect to it, the request will be recognized by the AP. If the server remains connected to the AP when it is in low power mode, the AP can wake it up through mechanisms such as wake-on-LAN and wake-on-wireless (similar to wake-on-LAN, where a magic packet could wake up a device) - it is understood the present invention is not limited in this respect. If the server is disconnected and only periodically examines beacons, the AP then indicates in its beacons 150 that the server needs to reconnect (e.g. includes the provider's device ID in the beacon and set a bit to indicate reconnection is needed). Then it is the responsibility of the server to reestablish the connection when its device ID is seen in beacons. Once the server wakes up and connects to AP 155, the AP may then forward the connection request so that the server and client can connect to each other. At 160 the AP forwards the connection request and at 165 connection establishment between client and server is accomplished.

It is noted that if the client was not connected to the network yet in step 4, the procedure for it to connect to the network may be integrated into step 5. For instance, in the example shown in FIG. 1, but not limited in this respect, in step 5, while client associates with the AP (i.e. connecting to the network), it also indicates the server it wants to use.

As provided herein, embodiments of the present invention enables servers to even disconnect from AP to further save power, by saving the cost of maintaining network connectivity, including layer-2 connection maintenance, replying to ARP requests, maintaining DHCP states, etc. Further, it enables easy detection of proxy failure since the proxy feature is integrated into the AP itself and can be inferred from the presence of layer 2 service discovery and server wakeup information elements in the beacons. Alternative methods based on higher-layer protocols make it much more difficult for servers to know if proxies continue to remain operational in the network. Also, by applying the proxy idea at layer 2, it can be easily integrated with layer-2 service discovery to enable clients that are either connected to the network or not connected yet to discover services provided in the network. This is a feature that also enables a client device to save power by disconnecting from the network and only connecting when it needs a service and discovers that the network provides the service. Finally, embodiments of the present invention support server devices that also implement different higher-layer service discovery protocols, such as, but not limited to, UPnP and ZeroConf.

## Claims

1. A method of server energy conservation in wireless networks, comprising:
integrating a layer-2 service discovery proxy with a wireless access point 'AP' (115) in said network, wherein said wireless AP advertises the services on behalf of a server (110) in said network to enable said server to go to a low power state and conserve energy;
said server, if connected to said wireless AP via a wireless link, disconnecting from said wireless AP and periodically listening to beacons to determine if it should wake up and reconnect; and
said wireless AP indicating in beacons (150), the beacons comprising a device ID of the server, that the server needs to reconnect whereupon it is the responsibility of said server to reestablish the connection (155) when its device ID is seen in the beacons.

2. The method of claim 1, further comprising said server registering its services, device ID and any other desired server information with said wireless AP proxy; optionally the method further comprises recording by the proxy in the wireless AP the service information registered by servers, and then indicating in its beacons that these services are available.

3. The method of claim 2, further comprising omitting from the beacon frames some of the service details to conserve beacon bandwidth.

4. The method of claim 2, further comprising using said Layer-2 proxy based service discovery includes discovering services advertised by said wireless AP either through broadcast or directed messages, or a combination of both.

5. The method of claim 4, further comprising establishing a wireless AP supported connection by when said client picks a particular server and requests to connect to it, said request will be recognized by said wireless AP and if said server remains connected to said wireless AP when it is in low power mode, said wireless AP can wake it up.

6. The method of claim 1, wherein once said server connects to said wireless AP, said wireless AP can forward the connection request so that said server and said client can connect to each other.

7. An apparatus (100), comprising:
a layer-2 service discovery proxy integrated with a wireless access point 'AP' (115) in a wireless network, wherein said wireless AP advertises the services on behalf of a server (110) in said network to enable said server to go to a low power state and conserve energy, wherein said server is arranged to disconnect from said wireless AP and periodically listen to beacons to determine if it should wake up and reconnect; and
said wireless AP is arranged to indicate in beacons (150), the beacons comprising a device ID of the server, that the server needs to reconnect whereupon if is the responsibility of said server to reestablish the connection (135) when its device ID is seen in the beacons.

8. The apparatus of claim 7, further comprising said server being arranged to register its services, device ID and any other desired server information with said wireless AP proxy.

9. The apparatus of claim 7, wherein said wireless AP proxy is arranged to record in the wireless AP the service information registered by servers, and indicate in its beacons that these services are available; optionally wherein some of the service details are omitted from the beacon frames to conserve beacon bandwidth.

10. The apparatus of claim 9, wherein said Layer-2 proxy based service discovery includes discovering services advertised by said wireless AP either through broadcast or directed messages, or a combination of both; optionally wherein when said client picks a particular server and requests to connect to it, it establishes a wireless AP supported connection and said request will be recognized by said wireless AP and if said server remains connected to said wireless AP when it is in low power mode, said wireless AP can wake it up.

## Patentansprüche

1. Verfahren zur Server-Energieeinsparung in drahtlosen Netzen, welches Folgendes umfasst:
Integrieren eines Schicht-2-Dienstentdeckungs-Proxys in einen drahtlosen Zugangspunkt (AP - *Access Point*) (115) in dem Netz, wobei der drahtlose AP die Dienste im Namen eines Servers (110) in dem Netz bekanntgibt, um es dem Server zu ermöglichen, in einen Zustand mit niedriger Leistung zu schalten und Energie zu sparen;
wobei sich der Server, wenn er über einen drahtlosen Link mit dem drahtlosen AP verbunden ist, von dem drahtlosen AP trennt und periodisch Statussignale abhört, um zu bestimmen, ob er "aufwachen" und sich wieder verbinden sollte; und
wobei der drahtlose AP Indikationen in Statussignalen (150) ausgibt, wobei die Statussignale eine Geräte-ID des Servers aufweisen, die der Server benötigt, um sich wieder zu verbinden, woraufhin es in der Verantwortung des Servers liegt, die Verbindung (155) wiederherzustellen, wenn seine Geräte-ID in den Statussignalen auftaucht.

2. Verfahren nach Anspruch 1, welches ferner umfasst, dass der Server seine Dienste, Geräte-ID und jegliche anderen gewünschten Serverinformationen bei dem drahtlosen AP-Proxy registriert; wahlweise umfasst das Verfahren ferner das Aufzeichnen der Dienstinformationen, die durch Server registriert werden, durch den Proxy in dem drahtlosen AP und das anschließende Ausgeben von Indikationen in seinen Statussignalen, dass diese Dienste verfügbar sind.

3. Verfahren nach Anspruch 2, welches ferner das Weglassen einiger der Dienstdetails aus den Statussignal-Frames zum Einsparen von Statussignalbandbreite umfasst.

4. Verfahren nach Anspruch 2, wobei das Verwenden der Schicht-2-Proxy-basierten Dienstentdeckung ferner das Entdecken von Diensten, die durch den drahtlosen AP entweder durch Broadcast- oder gerichtete Nachrichten oder eine Kombination aus beiden bekanntgegeben werden, beinhaltet.

5. Verfahren nach Anspruch 4, welches ferner das Herstellen einer durch den drahtlosen AP unterstützten Verbindung umfasst, durch die wenn der Client einen bestimmten Server auswählt und eine Verbindung zu diesem anfragt, die Anfrage durch den drahtlosen AP erkannt wird und, wenn der Server mit dem drahtlosen AP verbunden bleibt, wenn er sich im Energiesparmodus befindet, der drahtlose AP ihn "aufwecken" kann.

6. Verfahren nach Anspruch 1, wobei, wenn sich der Server mit dem drahtlosen AP verbindet, der drahtlose AP die Verbindungsanfrage weiterleiten kann, sodass sich der Server und der Client miteinander verbinden können.

7. Vorrichtung (100), welche Folgendes aufweist:
einen Schicht-2-Dienstentdeckungs-Proxy, der in einen drahtlosen Zugangspunkt (AP - *Access Point*) (115) in einem drahtlosen Netz integriert ist, wobei der drahtlose AP die Dienste im Namen eines Servers (110) in dem Netz bekanntgibt, um es dem Server zu ermöglichen, in einen Zustand niedriger Leistung zu schalten und Energie zu sparen, wobei der Server geeignet ist, sich von dem drahtlosen AP zu trennen und periodisch Statussignale abzuhören, um zu bestimmen, ob er "aufwachen" und sich wider verbinden sollte; und
wobei der drahtlose AP zum Ausgeben von Indikationen in Statussignalen (150) geeignet ist, wobei die Statussignale eine Geräte-ID des Servers aufweisen, die der Server benötigt, um sich wieder zu verbinden, woraufhin es in der Verantwortung des Servers liegt, die Verbindung (135) wiederherzustellen, wenn seine Geräte-ID in den Statussignalen auftaucht.

8. Vorrichtung nach Anspruch 7, welche ferner aufweist, dass der Server zum Registrieren seiner Dienste, Geräte-ID und jeglicher anderer gewünschter Serverinformationen bei dem drahtlosen AP-Proxy geeignet ist.

9. Vorrichtung nach Anspruch 7, wobei der drahtlose AP-Proxy zum Aufzeichnen der Dienstinformationen, die durch Server registriert werden, in dem drahtlosen AP und Angeben, in seinen Statussignalen, dass diese Dienste verfügbar sind, geeignet ist; wobei wahlweise einige der Dienstdetails aus den Statussignal-Frames weggelassen werden, um Statussignalbandbreite einzusparen.

10. Vorrichtung nach Anspruch 9, wobei die Schicht-2-Proxy-basierte Dienstentdeckung das Entdecken von Diensten, die durch den drahtlosen AP entweder durch Broadcast- oder gerichtete Nachrichten oder eine Kombination aus beiden bekanntgegeben werden, beinhaltet; wobei wahlweise, wenn der Client einen bestimmten Server auswählt und eine Verbindung zu diesem anfragt, dieser eine durch den drahtlosen AP gestützte Verbindung aufbaut und die Anfrage durch den drahtlosen AP erkannt wird, und wenn der Server mit dem drahtlosen AP verbunden bleibt, wenn er sich im Energiesparmodus befindet, der drahtlose AP diesen "aufwecken" kann.

## Revendications

1. Procédé de conservation d'énergie de serveur dans des réseaux sans fil, comprenant :
intégrer un serveur mandataire de découverte de services de couche 2 à un point d'accès sans fil « AP » (115) dans ledit réseau, ledit AP sans fil annonçant les services pour le compte d'un serveur (110) dans ledit réseau pour permettre au dit serveur de passer dans un état de faible puissance et de conserver de l'énergie ;
ledit serveur, s'il est connecté au dit AP sans fil par l'intermédiaire d'une liaison sans fil, se déconnectant dudit AP sans fil et écoutant périodiquement des balises pour déterminer s'il doit s'activer et se reconnecter ; et
ledit AP sans fil indiquant dans des balises (150), les balises comportant un ID de dispositif du serveur, que le serveur doit se reconnecter, à la suite de quoi ledit serveur a la responsabilité de rétablir la connexion (155) lorsque son ID de dispositif est vu dans les balises.

2. Procédé selon la revendication 1, comprenant en outre : enregistrer, par ledit serveur, ses services, son ID de dispositif et toutes autres informations de serveur désirées auprès dudit serveur mandataire AP sans fil ; optionnellement, le procédé comprend en outre : enregistrer par le serveur mandataire dans l'AP sans fil les informations de service enregistrées par des serveurs, puis indiquer dans ses balises que ces services sont disponibles.

3. Procédé selon la revendication 2, comprenant en outre : omettre des trames de balise certains des détails de service pour conserver une bande passante de balise.

4. Procédé selon la revendication 2, comprenant en outre : utiliser ledit serveur mandataire de couche 2 sur la base d'une découverte de services comprend découvrir des services annoncés par ledit AP sans fil par l'intermédiaire de messages diffusés ou dirigés, ou d'une combinaison des deux.

5. Procédé selon la revendication 4, comprenant en outre : établir une connexion supportée par un AP sans fil par laquelle lorsque ledit client choisit un serveur particulier et demande à se connecter, ladite requête sera reconnue par ledit AP sans fil et si ledit serveur reste connecté au dit AP sans fil lorsqu'il est dans un mode de faible puissance, ledit AP sans fil peut l'activer.

6. Procédé selon la revendication 1 dans lequel, une fois que ledit serveur s'est connecté au dit AP sans fil, ledit AP sans fil peut transmettre la requête de connexion pour que ledit serveur et ledit client puissent se connecter.

7. Appareil (100), comprenant :
un serveur mandataire de découverte de services de couche 2 intégré à un point d'accès sans fil « AP » (115) dans un réseau sans fil, ledit AP sans fil annonçant les services pour le compte d'un serveur (110) dans ledit réseau pour permettre au dit serveur de passer dans un état de faible puissance et de conserver de l'énergie, ledit serveur étant conçu pour se déconnecter dudit AP sans fil et écouter périodiquement des balises pour déterminer s'il doit s'activer et se reconnecter ; et
ledit AP sans fil étant conçu pour indiquer dans des balises (150), les balises comportant un ID de dispositif du serveur, que le serveur doit se reconnecter, à la suite de quoi ledit serveur a la responsabilité de rétablir la connexion (135) lorsque son ID de dispositif est vu dans les balises.

8. Appareil selon la revendication 7, comprenant en outre : ledit serveur étant conçu pour enregistrer ses services, son ID de dispositif et toutes autres informations de serveur désirées auprès dudit serveur mandataire AP sans fil.

9. Appareil selon la revendication 7, dans lequel ledit serveur mandataire AP sans fil est conçu pour enregistrer dans l'AP sans fil les informations de service enregistrées par des serveurs, et indiquer dans ses balises que ces services sont disponibles ; optionnellement, certains des détails de service étant omis des trames de balise pour conserver une bande passante de balise.

10. Appareil selon la revendication 9, dans lequel ladite découverte de services basés sur un serveur mandataire de couche 2 comprend : découvrir des services annoncés par ledit AP sans fil par l'intermédiaire de messages diffusés ou dirigés, ou d'une combinaison des deux ; optionnellement, lorsque ledit client choisit un serveur particulier et demande de se connecter, il établit une connexion supportée par un AP sans fil et ladite requête sera reconnue par ledit AP sans fil et si ledit serveur reste connecté au dit AP sans fil lorsqu'il est dans un mode de faible puissance, ledit AP sans fil peut l'activer.
